# FASCICULE DE BREVET EUROPEEN

(11) **EP 0 512 906 B1**
(45) Date de publication et mention de la délivrance du brevet: **05.07.1995**
(21) Numéro de dépôt: 92401243.8
(22) Date de dépôt: 30.04.1992
(51) Int. Cl.: H01M 2/10, B64G 1/42

(54) **Batterie d'accumulateurs nickel-hydrogène**
Nickel-Wasserstoff Akkumulatorenbatterie
Battery of nickel-hydrogen accumulators

(30) Priorité: 03.05.1991 FR 9105461
(43) Date de publication de la demande: 11.11.1992
(73) Titulaire: SAFT, F-93230 Romainville (FR)
(72) Inventeur: Morandi, José, F-93110 Rosny-Sous-Bois (FR)
(74) Mandataire: Weinmiller, Jürgen

(56) Documents cités:
- DE-U- 8 815 962
- US-A- 4 420 545
- PROCEEDINGS OF THE EUROPEAN SPACE POWER CONFERENCE - ESA SP-294 - 2-6 OCTOBER1989 MADRID, SPAIN vol. 1, Août 1989, pages 193 - 199; B. D. COX: 'THE GROUNDTESTING OF NICKEL HYDROGEN BATTERIES PRIOR TO LAUNCH'
- JOURNAL OF POWER SOURCES. vol. 18, no. 2-3, Août 1986, LAUSANNE CH pages 245 - 258; J.R. METCALFE: 'LIGHTWEIGT, DIRECT RADIATING NICKEL-HYDROGEN BATTERIES'
- 21ST INTERSOCIETY ENERGY CONVERSION ENGINEERING CONFERENCE - SAN DIEGO,CALIFORNIA 25-29 AUGUST, 1986, pages 1541 - 1546; D. W. WONG AND ALL:'INTELSAT VI NICKEL-HYDROGEN BATTERY'
- 21STH INTERSOCIETY ENERGY CONVERSION ENGINEERING CONFERENCE - SAN DIEGO,CALIFORNIA 25- 29 AUGUST, 1986 Août 1986, pages 1527 - 1530; M. J. MACKOWSKI:'A LOW EARTH ORBIT NICKEL HYDROGEN BATTERY DESIGN'
- 27TH POWER SOURCES SYMPOSIUM 21-24 JUNE 1976 ATLANTIC CITY Juin 1976, pages 131- 135; W. LUFT AND ALL: 'NICKEL-HYDROGEN BATTERY PACKAGING DEVELOPMENT'
- PROCEEDINGS OF THE 25TH INTERSOCIETY ENERGY CONVERSION ENGINEERING CONFERENCE -IECEC-90 12-17 AUGUST 1990 RENO, NEVADA vol. 3, Août 1990, pages 1 - 6; D. E.NAWROCKI AND ALL: 'THE HUBBLE SPACE TELESCOPE NICKEL-HYDROGEN BATTERY DESIGN'

## Description

La présente invention concerne une batterie d'accumulateurs nickel-hydrogène, notamment pour être utilisée dans les engins spatiaux.

L'énergie volumique et l'énergie massique sont deux paramètres fondamentaux d'une batterie spatiale. Ainsi lors de sa conception on cherche à minimiser ses dimensions et à abaisser son poids le plus possible.

On connaît une batterie d'accumulateurs nickel-hydrogène comprenant une plaque de base qui est une tôle de 3 à 4 mm d'épaisseur supportant les accumulateurs . Chaque accumulateur étant disposé dans un corset muni d'une embase permettant sa fixation sur la plaqe de base. Si l'embase est rentrante, sa fixation sur la plaque de base, par vissage ou rivetage, se fait par le dessous de la plaque. Si l'embase est sortante, sa fixation se fait par le dessus. Cette batterie d'accumulateurs comprend également des éléments de protection électrique reliés aux bornes des accumulateurs et disposés soit au-dessus des accumulateurs, soit en-dessous.

La plaque de base de cette batterie présente une certaine souplesse que l'on compense par la cohésion mécanique de l'ensemble de la batterie. En effet, il faut à la batterie suffisamment de raideur pour éviter de contraindre la paroi du satellite qui la supportera, cette paroi étant en nid d'abeilles pour des raisons de légèreté.

Dans cette batterie, les éléments de protection électrique étant situés en-dessous ou au-dessus des accumulateurs, la cohésion mécanique de l'ensemble peut être assurée en partie supérieure par des joints de colle entre accumulateurs ou par des éléments mécaniques de serrage.

Cette batterie d'accumulateurs possède une hauteur trop importante due à l'implantation des éléments de protection électrique.

La présente invention vise à pallier cet inconvénient. Pour cela, les éléments de protection électrique sont placés entre les accumulateurs et conduit à augmenter légèrement les dimensions dans le plan de la batterie, mais ceci n'est pas trop gênant. C'est surtout un gain sur la hauteur de la batterie que l'on veut obtenir. Le fait d'écarter les accumulateurs ne permet plus d'assurer la cohésion de la batterie par un joint de colle. Selon l'invention, et pour éviter l'emploi de système de maintien mécanique trop lourd, on a donné à la plaque de base une configuration particulière permettant à elle seule d'assurer la cohésion de l'ensemble de la batterie.

L'invention a donc pour objet une batterie d'accumulateurs nickel-hydrogène comprenant une plaque de base supportant les accumulateurs, chaque accumulateur étant maintenu par un corset fixé à la plaque de base, la batterie comprenant également des éléments de protection électrique des accumulateurs, caractérisée en ce que la plaque de base comporte des alvéoles de réception des corsets, les éléments de protection électrique étant disposés entre les accumulateurs.

L'invention sera mieux comprise et d'autres avantages et particularités apparaîtront à la lecture de la description qui va suivre, donnée à titre non limitatif, accompagnée des dessins annexés parmi lesquels :
- la figure 1 est une vue de profil et en coupe partielle de la plaque de base de la batterie d'accumulateurs selon l'invention,
- la figure 2 est une vue de dessus de cette plaque de base,
- la figure 3 illustre le montage d'un accumulateur dans son corset selon la disposition retenue par l'invention,
- la figure 4 illustre la mise en place d'un corset sur la plaque de base.

Les accumulateurs nickel-hydrogène utilisés dans le domaine spatial se présentent extérieurement sous la forme d'un cylindre terminé à ses deux extrémités par une demi-sphère. L'une des demi-sphères porte les deux bornes électriques et le queusot nécessaire à l'élaboration de l'accumulateur. Les accumulateurs sont maintenus dans des corsets pour leur fixation sur la plaque de base de la batterie.

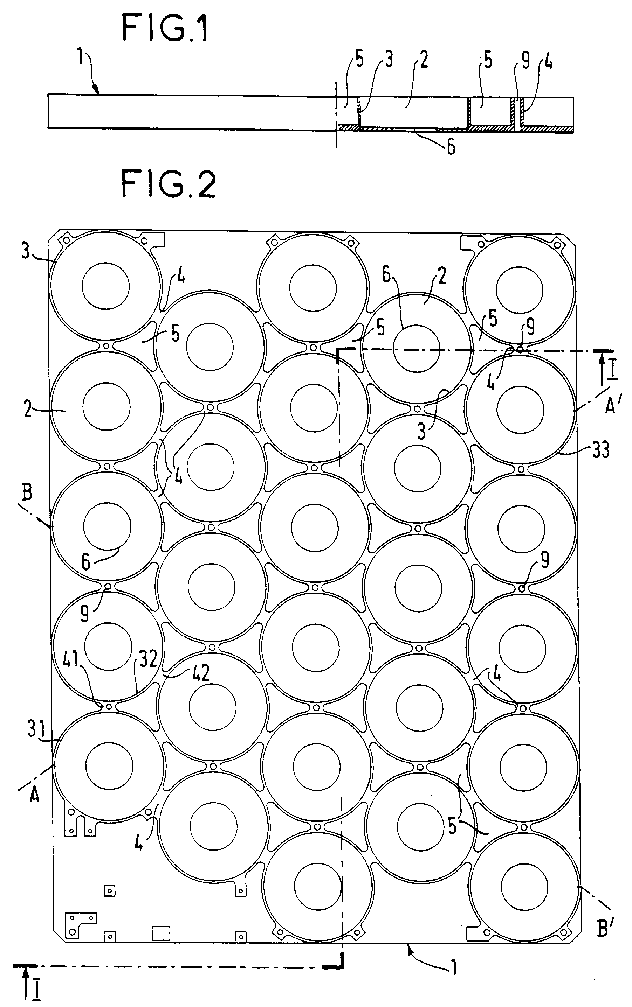

Les figures 1 et 2 sont des vues de profil et de dessus de la plaque de base utilisée dans la batterie d'accumulateurs selon l'invention. C'est une plaque de préférence en aluminium pour des raisons de poids.

La plaque de base 1 comporte des alvéoles circulaires 2 creusées sur la plus grande partie de l'une de ses faces principales. Les alvéoles sont avantageusement prévues selon un arrangement hexagonal et sont pratiquement adjacentes pour le meilleur gain de place possible. La plaque 1 est également évidée à l'extérieur des parois 3 des alvéoles de façon à laisser le moins de matière possible. Cependant, les parois des alvéoles sont reliées entre elles, par le chemin le plus court, par des parties pleines 4. Ces parties pleines 4, qui peuvent avoir la même hauteur que les parois 3 des alvéoles, sont de masse réduite si bien qu'il existe des dépressions 5 entre trois alvéoles adjacentes. Dans l'exemple de réalisation représenté à la figure 1, le fond des alvéoles est plus mince que le fond subsistant aux autres endroits. Le fond des alvéoles est percé d'un trou central 6 suffisamment grand pour alléger encore la plaque.

On constate que si on suit une ligne AA′ au plus près, c'est-à-dire en passant par le quart de paroi 31, la partie pleine 41, le quart de paroi 32, la partie pleine 42 et ainsi de suite jusqu'au quart de paroi 33, on est en présence d'une nervure. Il existe ainsi un certain nombre de nervures parallèles à la ligne AA′. La même chose peut être dite à propos de la ligne BB′ à laquelle correspond une nervure. De même que précédemment, il existe un certain nombre de nervures parallèles à la ligne BB′. On est ainsi en présence de nervures du type AA′ croisées avec des nervures du type BB′. Ce réseau de nervures renforce considérablement la résistance mécanique de la plaque de base et confère une cohésion entre accumulateurs suffisante. Les accumulateurs seront donc fixés par une extrémité des corsets à la plaque de base, aucun autre élément de maintien n'étant nécessaire.

La plaque de base peut comprendre encore d'autres détails de réalisation non référencés pour permettre sa fixation dans un satellite.

L'entrée des alvéoles est chanfreinée pour faciliter l'introduction des corsets maintenant les accumulateurs.

Les corsets sont de simples tronçons de tube à section circulaire et sans embase particulière d'où une réduction considérable du coût d'obtention de cette pièce et un encombrement réduit à la seule empreinte de section extérieure de celui-ci. Le coût réduit est un avantage non négligeable dans le cas d'une application spatiale. En effet, les corsets utilisés dans les dispositifs de l'art connu sont de conception moins simple : ils possèdent des embases usinées pour être vissées ou rivetées, ou peuvent être formés à partir d'une feuille enroulée et maintenue dans cet état par vissage.

En plus de son rôle mécanique, le corset doit assurer une fonction de continuité thermique entre les accumulateurs. En effet, la batterie doit fonctionner selon une plage de variation thermique très restreinte (quelques degrés Celsius, par exemple entre 0 et 10°C) alors que la température extérieure, à proximité de la batterie, peut varier entre - 25 et + 60°C. En outre, la batterie perturbe l'ambiance thermique : elle chauffe quand elle délivre de l'énergie et elle se refroidit quand elle se recharge. Il existe classiquement sur ce type de batterie un système de régulation thermique. Il faut donc une bonne continuité thermique entre les accumulateurs. Le corset contribue à la bonne continuité thermique en évacuant les calories ou en les amenant selon le cas.

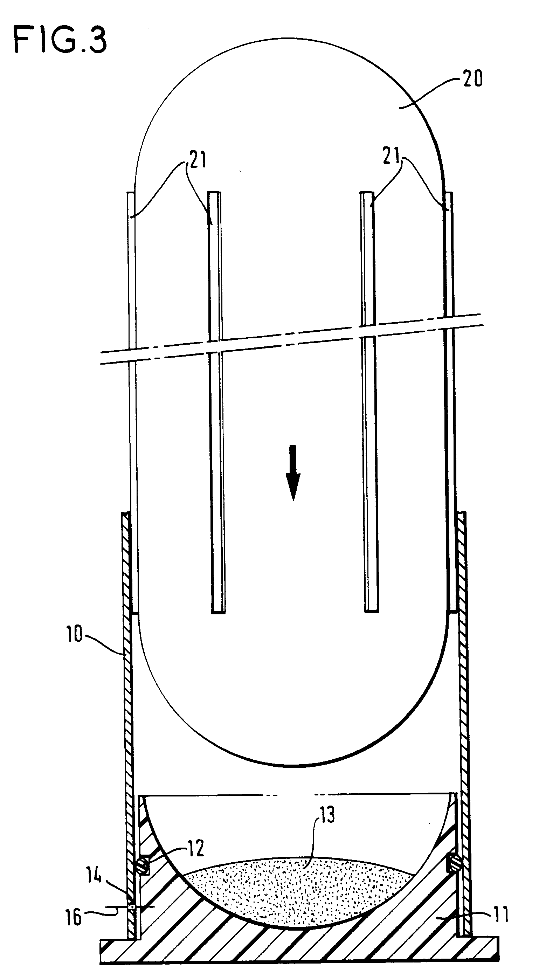

Les accumulateurs sont montés dans leur corset avant d'être fixés sur la plaque de base. Le montage peut se faire selon la méthode illustrée par la figure 3. On ferme un côté du corset 10 par un bouchon Il de forme creuse et hémisphérique correspondante à la demi-sphère terminant le corset. Un joint torique 12 est disposé dans une gorge périphérique du bouchon pour assurer l'étanchéité entre le corset et le bouchon. Le fond hémisphérique du bouchon est pourvu d'un petit tas de colle 13, par exemple de la résine commercialisée sous la marque "Solithane C 113". L'accumulateur 20 est équipé de fines bandelettes de centrage 21 régulièrement disposées et collées sur la périphérie de la partie cylindrique de l'accumulateur et parallèles à l'axe de l'accumulateur. Ces bandelettes peuvent être en un matériau tel que celui commercialisé sous la marque "Kapton" et être disposées tous les 60° autour de l'axe de l'accumulateur. Elles peuvent avoir 0,1 mm d'épaisseur. L'accumulateur ainsi équipé de ses bandelettes est prévu pour être glissant juste dans le corset. En enfonçant l'accumulateur dans son corset ainsi que l'indique la figure 3, on provoque la remontée de la résine dans l'espace séparant le corset de la partie cylindrique de l'accumulateur. Le demi-hémisphère de l'accumulateur épousant sa contrepartie du bouchon, toute la résine est forcée de remonter. Le bouchon est ensuite retiré et on provoque la polymérisation de la résine. On obtient de cette façon une nappe de colle exempte de bulle, ce qui est important pour avoir une bonne conduction thermique entre le corset et l'accumulateur, ainsi qu'un bon isolement électrique. On peut alors fixer à l'intérieur du corset et sous l'accumulateur la cosse de l'une des extrémités d'un fil électrique au moyen d'une vis à tête fraisée qui se loge dans le trou 14. L'assemblage des corsets sur la plaque de base est réalisé par collage. Un film de colle de l'ordre de 0,3 mm d'épaisseur est disposé entre la peau extérieure du corset en partie basse et la peau intérieure de l'alvéole de la plaque de base.

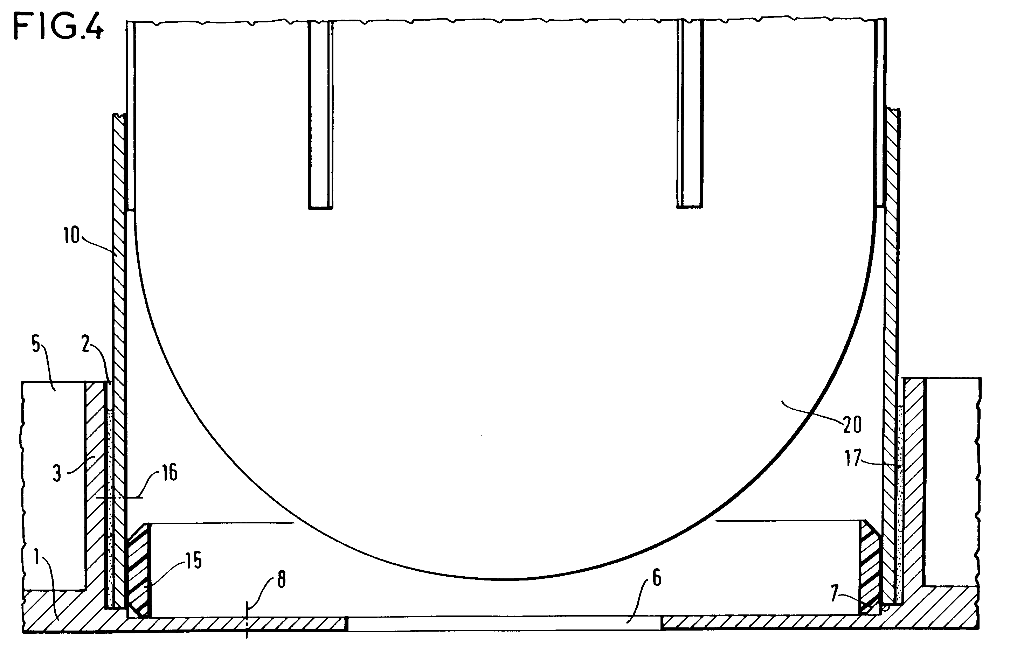

La mise en place d'un corset sur la plaque de base est représentée à la figure 4. On place d'abord une bague centreuse 15 en plastique de qualité spatiale au fond de l'alvéole 2. Cette bague se centre grâce au talon 7 du fond de l'alvéole. Avant de mettre en place le corset 10 maintenant l'accumulateur 20, on fixe le fil de masse devant relier électriquement le corset à la plaque de base. Ce fil de masse est relié d'une part au corset par une vis à tête fraisée se logeant dans le trou 14 (voir figure 3) et un écrou, d'autre part à la plaque de base par une vis se fixant au fond de l'alvéole. On a représenté symboliquement les points de fixation de ce fil de masse : l'axe 16 pour le corset (c'est l'axe du trou 14) et l'axe 8 pour la plaque de base.

Avant d'enfoncer le corset dans son alvéole, on a rempli au moyen d'une seringue la gorge existant entre la paroi 3 de l'alvéole et la bague 15. On enfonce le corset dans l'alvéole. Le diamètre intérieur du corset est égal, au jeu près, au diamètre extérieur de la bague. La colle remonte alors entre la paroi 3 de l'alvéole et le corset pour constituer une nappe 17 exempte de bulle d'air. La colle peut être du même type que celle qui a été utilisée pour coller l'accumulateur dans son corset. En haut de l'alvéole, on peut prévoir un petit lamage pour recueillir éventuellement un excès de colle.

Les éléments de protection électrique des accumulateurs (des diodes par exemple) peuvent être fixés, par l'intermédiaire d'un petit support par accumulateur, dans les dépressions 5 par vissage. Les éléments de protection électrique sont alors reliés par des fils de connexion aux bornes des accumulateurs.

La batterie sera fixée sur la paroi du satellite par des vis traversant la plaque de base par les trous 9 percés dans certaines parties pleines 4.

A titre d'exemple, la profondeur d'une alvéole peut être de 29 mm pour un diamètre intérieur de 92 mm et une épaisseur de paroi de 2 mm.

## Revendications

1. Batterie d'accumulateurs nickel-hydrogène comprenant une plaque de base supportant les accumulateurs, chaque accumulateur étant maintenu par un corset fixé à la plaque de base, la batterie comprenant également des éléments de protection électrique des accumulateurs, caractérisée en ce que la plaque de base (1) comporte des alvéoles (2) de réception des corsets (10), les éléments de protection électrique étant disposés entre les accumulateurs (20).

2. Batterie selon la revendication 1, caractérisée en ce que les alvéoles (2) sont disposées en arrangement hexagonal.

3. Batterie selon l'une des revendications 1 ou 2, caractérisée en ce que le fond des alvéoles (2) est percé.

4. Batterie selon l'une quelconque des revendications 1 à 3, caractérisée en ce que les alvéoles (2) sont reliées entre elles par des parties pleines (4).

5. Batterie selon l'une quelconque des revendications 1 à 4, caractérisée en ce que les éléments de protection électrique sont disposés dans des dépressions (5) de la plaque de base disposées entre les alvéoles (2).

6. Batterie selon l'une quelconque des revendications 1 à 5, caractérisée en ce que les corsets (10) sont de simples tronçons de tube.

7. Batterie selon l'une quelconque des revendications 1 à 6, caractérisée en ce que les accumulateurs (20) sont maintenus dans leurs corsets par une nappe de colle.

8. Batterie selon l'une quelconque des revendications 1 à 7, caractérisée en ce que les corsets (10) sont fixés dans les alvéoles (2) par une nappe de colle (17).

9. Batterie selon l'une quelconque des revendications précédentes, caractérisée en ce que chaque corset (10) est centré dans son alvéole (2) au moyen d'une bague (15).

## Patentansprüche

1. Nickel-Wasserstoff-Akkumulatorenbatterie, die eine die Akkumulatoren tragende Basisplatte aufweist, wobei jeder Akkumulator von einer an der Basisplatte befestigten Manschette gehalten wird und wobei die Batterie weiter elektrische Schutzelemente für die der Akkumulatoren aufweist, dadurch gekennzeichnet, daß die Basisplatte (1) Zellen (2) zur Aufnahme der Manschetten (10) aufweist, wobei die elektrischen Schutzelemente zwischen den Akkumulatoren (20) angeordnet sind.

2. Batterie nach Anspruch 1, dadurch gekennzeichnet, daß die Zellen (2) im Sechseck angeordnet sind.

3. Batterie nach einem der Ansprüche 1 und 2, dadurch gekennzeichnet, daß der Boden der Zellen (2) ein Loch aufweist.

4. Batterie nach einem beliebigen der Ansprüche 1 bis 3, dadurch gekennzeichnet, daß die Zellen (2) miteinander durch massive Bereiche (4) verbunden sind.

5. Batterie nach einem beliebigen der Ansprüche 1 bis 4, dadurch gekennzeichnet, daß die elektrischen Schutzelemente in Vertiefungen (5) der Basisplatte angeordnet sind, die sich zwischen den Zellen (2) befinden.

6. Batterie nach einem beliebigen der Ansprüche 1 bis 5, dadurch gekennzeichnet, daß die Manschetten (10) einfache Rohrabschnitte sind.

7. Batterie nach einem beliebigen der Ansprüche 1 bis 6, dadurch gekennzeichnet, daß die Akkumulatoren (20) in ihren Manschetten durch eine Kleberschicht gehalten werden.

8. Batterie nach einem beliebigen der Ansprüche 1 bis 6, dadurch gekennzeichnet, daß die Manschetten (10) in den Zellen (2) durch eine Kleberschicht (17) gehalten werden.

9. Batterie nach einem beliebigen der vorhergehenden Ansprüche, dadurch gekennzeichnet, daß jede Manschette (10) in ihrer Zelle (2) mittels eines Rings (15) zentriert wird.

## Claims

1. A battery of nickel-hydrogen storage cells, which battery includes a baseplate supporting the storage cells, each storage cell being held by a sleeve fixed to the baseplate, the battery further including electrical-protection components for electrically protecting the storage cells, said battery being characterized in that the baseplate (1) includes recesses (2) for receiving the sleeves (10), the electrical-protection components being disposed between the storage cells (20).

2. A battery according to claim 1, characterized in that the recesses (2) are disposed in a hexagonal pattern.

3. A battery according to claim 1 or 2, characterized in that the bottoms of the recesses (2) have through holes.

4. A battery according to any one of claims 1 to 3, characterized in that the recesses (2) are interconnected via solid portions (4).

5. A battery according to any one of claims 1 to 4, characterized in that the electrical-protection components are disposed in cavities (5) in the baseplate, which cavities are disposed between the recesses (2).

6. A battery according to any one of claims 1 to 5, characterized in that the sleeves (10) are merely lengths of tube.

7. A battery according to any one of claims 1 to 6, characterized in that each of the storage cells (20) is held in its sleeve by means of a coating of adhesive.

8. A battery according to any one of claims 1 to 7, characterized in that each of the sleeves (10) is fixed in its recess (2) by means of a coating of adhesive (17).

9. A battery according to any preceding claim, characterized in that each sleeve (10) is centered in its recess (2) by means of a ring (15).
